# EUROPÄISCHE PATENTSCHRIFT

(11) **EP 1 840 008 B1**
(45) Veröffentlichungstag und Bekanntmachung des Hinweises auf die Patenterteilung: **09.03.2011**
(21) Anmeldenummer: 07005523.1
(22) Anmeldetag: 17.03.2007
(51) Int. Cl.: B62D 27/02, B62D 29/00

(54) **Anordnung zur Verbindung von Bauelementen einer Fahrzeugkarosserie**
Assembly for connecting components of a car body
Dispositif destiné à la liaison de composants d'une carrosserie de véhicule automobile

(30) Priorität: 31.03.2006 DE 102006014989
(43) Veröffentlichungstag der Anmeldung: 03.10.2007
(73) Patentinhaber: Dr. Ing. h.c. F. Porsche AG, 70435 Stuttgart (DE)
(72) Erfinder: Albrecht, Klaus-Peter, 74321 Bietigheim-Bissingen (DE)

(56) Entgegenhaltungen:
- DE-B1- 2 943 773
- GB-A- 194 272
- US-A- 1 711 725

## Beschreibung

Die vorliegende Erfindung bezieht sich auf eine Verbindungsanordnung für Bauelemente einer Fahrzeugkarosserie.

Obwohl auf beliebige Fahrzeuge und Fahrzeugkarosserien anwendbar, werden die vorliegende Erfindung sowie die ihr zugrunde liegende Problematik in Bezug auf eine Verbindungsanordnung zwischen einem Rohbauabschnitt aus Aluminium und einem Überrollbügel aus Stahl näher erläutert.

Verbindungsanordnungen von Bauelementen, beispielsweise von Überrollbügeln, mit verschiedenen Karosseriebauteilen sind im modernen Fahrzeugbau hinlänglich bekannt und umfassen im Wesentlichen Anordnungen mit Überlappungsbereichen, welche untereinander zum Beispiel formschlüssig mit Nieten oder stoffschlüssig mit verschweißten Blechen ausgeführt sind.

Als Beispiel zur Illustration dient DE 29 43 773 B1, welche eine Verbindung von zwei Rohren mit einem eingeschweißten Blech beschreibt, das beide Rohre durchdringt, mit beiden Rohren verschweißt ist und sich in Richtung der Längsachse der Rohre erstreckt. Nachteilig hierbei ist einerseits die Verschweißung des innen liegenden Rohres, und andererseits, dass dieses nicht auf Rohre mit unterschiedlichen Werkstoffen übertragbar ist, denn bei Fahrzeugkarosserien, die in einem Hybridaufbau ausgeführt sind, ist eine Verbindung zwischen einem Überrollbügel bzw. -käfig aus Stahl und einem Karosseriebauteil aus Aluminium erforderlich.

Es wurden bereits verschiedene Lösungen zur Verbindung derartiger Bauteile vorgeschlagen.

So lehrt zum Beispiel die US 1,711,725 eine Verbindung zweier rohrförmiger Bauteile, die in einem Überlappungsbereich ein Einsatzstück aufweisen, das beide Rohre durchdringt und in seinem Inneren zwei gegenüber liegende Keile aufnimmt, die gegenseitig durch eine jeweilige Verschraubung zusammengezogen sind.

An diesen Ansätzen hat sich jedoch die Tatsache als nachteilig herausgestellt, dass zusätzliche Einzelteile vorgesehen werden müssen, welche in einem zusätzlichen Herstellungsaufwand, zusätzlichen Herstellungskosten sowie in einer Gewichtserhöhung resultieren.

Somit liegt der vorliegenden Erfindung die Aufgabe zugrunde, eine Anordnung zur Verbindung von Bauelementen einer Fahrzeugkarosserie zu schaffen, welche die obengenannten Nachteile beseitigt und insbesondere gegenüber vorbekannten Strukturen hinsichtlich des Installationsaufwandes Verbesserungen bietet und eine wirtschaftlichere Lösung schafft.

### VORTEILE DER ERFINDUNG

Diese Aufgabe wird erfindungsgemäß durch die Anordnung zur Verbindung mit den Merkmalen gemäß Patentanspruch 1 gelöst.

Die der vorliegenden Erfindung zugrunde liegende Idee besteht darin, dass eine Anordnung zur Verbindung von mindestens zwei aus unterschiedlichen metalilschen Werkstoffen hergestellten Bauelementen einer Fahrzeugkarosserie ein Verbindungselement aufweist, wobei das erste Bauelement das zweite Bauelement in einem Überlappungsbereich zumindest teilweise umgibt, wobei das Verbindungselement in zugeordnete Öffnungen zumindest teilweise zur Bildung einer form- und/oder kraftschlüssigen Verbindung der Bauelemente eingesetzt und ausschließlich mit dem ersten Bauelement stoffschlüssig durch eine Schweißnaht verbunden ist. Dadurch wird eine einfache form-, kraft- und stoffschlüssige Verbindung zweier Bauteile aus unterschiedlichem Werkstoff geschaffen.

Die vorliegende Erfindung weist gegenüber den oben genannten Ansätzen den Vorteil auf, dass die Anzahl der Bauteile der Verbindung auf ein Minimum reduziert ist und der Herstellungs- und Installationsaufwand geringer ist, da das Verbindungselement aus nur zwei Keilelementen besteht.

Diese Keilelemente durchdringen die Verbindungsstelle im Überlappungsbereich der beiden zu verbindenden Bauelemente. Sie bestehen aus dem Werkstoff des außen liegenden Bauelementes und werden nach Einsatz durch geeignete Öffnungen miteinander verkeilt, wobei zunächst eine kraft- und zum Teil formschlüssige Verbindung mit beiden Bauelementen erzeugt wird. Danach werden die Keilelemente mit dem außen liegenden Bauelement stoffschlüssig verbunden.

Dabei sind in bevorzugter Ausführung das erste und zweite Bauelement aus einem metallischen Werkstoff hergestellt, wobei vorzugsweise das erste Bauelement aus Stahl besteht und das zweite Bauelement aus Aluminium hergestellt ist.

In den Unteransprüchen finden sich vorteilhafte Ausgestaltungen und Verbesserungen der im Patentanspruch 1 angegebenen Anordnung zur Verbindung.

### ZEICHNUNGEN

Die Erfindung wird im Folgenden anhand von Ausführungsbeispielen unter Bezugnahme auf die beiliegenden Figuren der Zeichnung näher erläutert.

Von den Figuren zeigen:
- Figur 1: eine Schnittansicht einer Teilanordnung eines Ausführungsbeispiels der vorliegenden Erfindung;
- Figur 2: eine Schnittansicht eines Ausführungsbeispiels einer erfindungsgemäßen Anordnung; und
- Figur 3: eine schematische Draufsicht auf die Anordnung nach Figur 2.

### BESCHREIBUNG BEVORZUGTER AUSFÜHRUNGSBEISPIELE

In den Figuren der Zeichnung bezeichnen dieselben Bezugszeichen gleiche oder funktionsgleiche Komponenten, soweit nichts Gegenteiliges angegeben ist.

Koordinaten x, y, z dienen zur Orientierung in den jeweiligen Figuren.

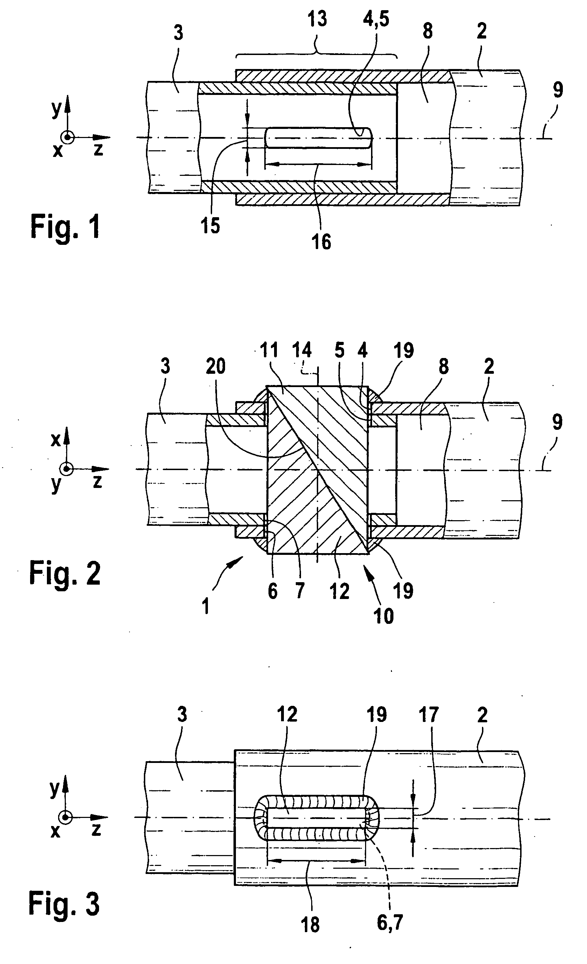

Figur 1 stellt eine Schnittansicht einer Teilanordnung eines Ausführungsbeispiels der vorliegenden Erfindung mit zwei Bauelementen 2 und 3, welche zur Verbindung untereinander vorbereitet sind. Die Schnittansicht verläuft in Richtung x der Längsachse 9 der Bauelemente 2, 3. In diesem Beispiel ist das erste Bauelement 2 ein Endabschnitt eines Rohres aus Stahl eines Überrollkäfigs bzw. eines Überrollbügels eines Fahrzeugs. Das zweite Bauelement 3 ist ein Endabschnitt eines Rohres aus Aluminium einer Fahrzeugskarosserie.

Der Endabschnitt des zweiten Bauelementes 3 ist in den Endabschnitt des ersten Bauelementes 2 in einen Hohlraum 8 so eingebracht, dass ein Überlappungsbereich 13 mit einer bestimmten Länge beider Bauelementen 2, 3 vorhanden ist.

Die beiden Bauelemente 2, 3 weisen in ihren Endabschnitten jeweils gegenüber liegende Öffnungen 4, 6 und 5, 7 auf (siehe auch Figur 2), von denen die Öffnungen im außen angeordneten ersten Bauelement 2 als erste und zweite Außenöffnung 4, 6 und die Öffnungen im innen angeordneten zweiten Bauelement 3 als erste und zweite Innenöffnung 5, 7 (Figur 2) in diesem Beispiel benannt sind. Hier sind die Öffnungen 4, 6 und 5, 7 in Gestalt von Langlöchern ausgebildet, welche eine Öffnungsbreite 15 und eine Öffnungslänge 16 aufweisen, wobei die Öffnungslänge 16 in Richtung x der Längsachse 9 verläuft.

Die Endabschnitte der beiden Bauelemente 2, 3 sind in dem Überlappungsbereich 13 so ausgerichtet, dass die Außenöffnungen 4, 6 jeweils mit den Innenöffnungen 5, 7 fluchten.

Dieses zeigt Figur 2 in einer weiteren Schnittansicht, welche gegenüber der Ansicht nach Figur 1 um 90° um die Längsachse 9 gedreht als Anordnung 1 zur Verbindung der beiden Bauelemente 2 und 3 dargestellt ist.

Durch die fluchtenden Öffnungen 4, 5, 6, 7 ist ein Verbindungselement 10 mit einer gemeinsamen Längsachse 14 senkrecht zur Längsachse 9 verlaufend eingesetzt, welches aus zwei Keilelementen 11 und 12 besteht. Die Keilelemente 11, 12 sind gegenüber stehend in die Öffnungen 4, 5, 6, 7 eingetrieben, so dass ihre Trennebene 20 diagonal in einem Winkel zur Längsachse 9 der Bauelemente 2, 3 verläuft. Jeweils ein Endbereich der Keilelemente 11, 12 ragt aus der jeweiligen Außenöffnung 4, 6 um ein bestimmtes Maß hervor.

Durch das gegenseitige Verkeilen der Keilelemente 11, 12 ist eine form- und kraftschlüssige Verbindung zwischen den Bauelementen 2, 3 und dem Verbindungselement 10 hergestellt. Es ist bevorzugt, dass die Keilelemente 11, 12 aus dem Werkstoff hergestellt sind, aus dem das außen angeordnete, erste Bauelement 2 besteht. Dieser Werkstoff ist vorzugsweise Stahl.

Die aus den Außenöffnungen 4, 6 herausragenden Enden der Keilelemente 11, 12 sind jeweils mit dem außen angeordneten ersten Bauelement 2 stoffschlüssig verbunden, beispielsweise mittels einer Schweißnaht 19.

Eine Draufsicht der Außenseite zeigt Figur 3, wobei die Anordnung nach Figur 2 um 90° um die Längsachse gedreht gezeigt ist.

In dem in Figur 2 und 3 dargestellten Ausführungsbeispiel sind die Keilelemente 11, 12 so ausgebildet, dass ihre Dicke 17, die zur Öffnungsbreite 15 (Figur 1) der Öffnungen 4, 5, 6, 7 korrespondiert, im Verlauf der gemeinsamen Längsachse 14 der Keilelemente 11, 12 konstant ist. Dabei wird beim gegenseitigen Eintreiben der Keilelemente 11, 12 in die Öffnungen 4, 5, 6, 7 eine Kraft in Richtung x der Längsachse 9 erzeugt.

In einer alternativen Ausgestaltung ist die Breite 18 der Keilelemente 11, 12 korrespondierend zur Öffnungslänge 16 (Figur 1) im Verlauf der gemeinsamen Längsachse 14 der Keilelemente 11, 12 konstant. In diesem Fall verläuft die Trennebene 20 parallel zur Längsachse 9. Beim Eintreiben der Keilelemente 11, 12 wird eine Kraft in Richtung der Öffnungsbreite 15 erzeugt.

Mit der erfindungsgemäßen Anordnung zur Verbindung von Bauelementen 2, 3 ist eine vorteilhaft einfache Verbindung geschaffen, die eine minimalen Anzahl von Bauteilen aufweist. Die Vorbereitung der zu verbindenden Bauelemente 2, 3 mit Einbringen der Öffnungen 4, 5, 6, 7 ist relativ einfach, ebenfalls der Zusammenbau, welcher kein Spezialwerkzeug erfordert. Die Verbindung ist form-, kraft- und stoffschlüssig und somit besonders verlässlich, wobei auch große Kräfte übertragbar sind.

Obwohl die vorliegende Erfindung vorstehend anhand bevorzugter Ausführungsbeispiele beschrieben wurde, ist sie darauf nicht beschränkt, sondern auf vielfältige Weise modifizierbar.

So ist es zum Beispiel denkbar, dass die zu verbindenden Bauelemente 2, 3 auch eine andere Profilform aufweisen können.

Weiterhin können die Keilelemente 11, 12 so ausgebildet sein, dass die Trennebene 20 einen anderen Verlauf aufweist als in den erläuterten Beispielen.

Auch eine Umkehr der Werkstoffe der Bauelemente 2, 3 und der Keilelemente 11, 12 ist denkbar.

## Patentansprüche

1. Anordnung (1) zur Verbindung von mindestens zwei aus unterschiedlichen metallischen Werkstoffen hergestellten Bauelementen (2, 3) einer Fahrzeugkarosserie mit einem Verbindungselement (10), wobei das erste Bauelement (2) das zweite Bauelement (3) in einem Überlappungsbereich (13) zumindest teilweise umgibt, wobei das Verbindungselement (10) in zugeordnete Öffnungen (4, 5, 6, 7) zumindest teilweise zur Bildung einer form- und/oder kraftschlüssigen Verbindung der Bauelemente (2, 3) eingesetzt ist, **dadurch gekennzeichnet, dass** das Verbindungselement (10) ausschließlich mit dem ersten Bauelement (2) stoffschlüssig durch eine Schweißnaht (19) verbunden ist.

2. Anordnung (1) nach Anspruch 1, **dadurch gekennzeichnet, dass** das Verbindungselement (10) aus mindestens zwei Keilelementen (11,12) besteht.

3. Anordnung (1) nach Anspruch 2, **dadurch gekennzeichnet, dass** die Keilelemente (11, 12) in dem Überlappungsbereich (13) gegenüber liegend angeordnet sind.

4. Anordnung (1) nach Anspruch 2 oder 3, **dadurch gekennzeichnet, dass** die Keilelemente (11, 12) aus dem gleichen Werkstoff wie das erste Bauelement (2) bestehen.

5. Anordnung (1) nach einem der Ansprüche 2 bis 4, **dadurch gekennzeichnet, dass** die Dicke (17) der Keilelemente (11, 12) im Verlauf ihrer gemeinsamen Längsachse (14) konstant und korrespondierend zu einer Öffnungsbreite (15) der Öffnungen (4, 5, 6, 7) ausgebildet ist.

6. Anordnung (1) nach einem der Ansprüche 2 bis 4, **dadurch gekennzeichnet, dass** die Breite (18) der Keilelemente (11, 12) im Verlauf ihrer gemeinsamen Längsachse (14) konstant und korrespondierend zu einer Öffnungslänge (16) der Öffnungen (4, 5, 6, 7) ausgebildet ist.

7. Anordnung (1) nach einem der Ansprüche 1 bis 6, **dadurch gekennzeichnet, dass** das erste Bauelement (2) und das Verbindungselement (10) aus Stahl hergestellt sind, wobei das zweite Bauelement (3) aus Aluminium hergestellt ist.

## Claims

1. Assembly (1) for connecting at least two components (2, 3) of a vehicle body, which are produced from different metallic materials, with a connection element (10), wherein the first component (2) at least partially surrounds the second component (3) in an overlapping region (13), wherein the connection element (10) is inserted at least partially into assigned openings (4, 5, 6, 7) in order to form a positive and/or nonpositive connection of the components (2, 3), **characterized in that** the connection element (10) is integrally connected exclusively to the first component (2) by a weld seam (19).

2. Assembly (1) according to Claim 1, **characterized in that** the connection element (10) consists of at least two wedge elements (11, 12).

3. Assembly (1) according to Claim 2, **characterized in that** the wedge elements (11, 12) are arranged so as to lie opposite one another in the overlapping region (13).

4. Assembly (1) according to Claim 2 or 3, **characterized in that** the wedge elements (11, 12) consist of the same material as the first component (2).

5. Assembly (1) according to one of Claims 2 to 4, **characterized in that** the thickness (17) of the wedge elements (11, 12) over the course of their common longitudinal axis (14) is formed so as to be constant and so as to correspond to an opening width (15) of the openings (4, 5, 6, 7).

6. Assembly (1) according to one of Claims 2 to 4, **characterized in that** the width (18) of the wedge elements (11, 12) over the course of their common longitudinal axis (14) is formed so as to be constant and so as to correspond to an opening length (16) of the openings (4, 5, 6, 7).

7. Assembly (1) according to one of Claims 1 to 6, **characterized in that** the first component (2) and the connection element (10) are produced from steel, the second component (3) being produced from aluminium.

## Revendications

1. Dispositif (1) destiné à la liaison d'au moins deux composants (2, 3) d'une carrosserie de véhicule automobile, fabriqués en matériaux métalliques différents, avec un élément de liaison (10), dans lequel le premier composant (2) entoure au moins partiellement le deuxième composant (3) dans une zone de recouvrement (13), dans lequel l'élément de liaison (10) est introduit au moins partiellement dans des ouvertures associées (4, 5, 6, 7) pour former une liaison des composants (2, 3) par complémentarité de forme et/ou de force, **caractérisé en ce que** l'élément de liaison (10) est lié exclusivement au premier composant (2) par complémentarité de matière au moyen d'une soudure (19).

2. Dispositif (1) selon la revendication 1, **caractérisé en ce que** l'élément de liaison (10) se compose d'au moins deux éléments en coin (11, 12).

3. Dispositif (1) selon la revendication 2, **caractérisé en ce que** les éléments en coin (11, 12) sont disposés l'un en face de l'autre dans la zone de recouvrement (13).

4. Dispositif (1) selon la revendication 2 ou 3, **caractérisé en ce que** les éléments en coin (11, 12) se composent du même matériau que le premier composant (2) .

5. Dispositif (1) selon l'une quelconque des revendications 2 à 4, **caractérisé en ce que** l'épaisseur (17) des éléments en coin (11, 12) est constante le long de leur axe longitudinal commun (14) et correspond à une largeur d'ouverture (15) des ouvertures (4, 5, 6, 7) .

6. Dispositif (1) selon l'une quelconque des revendications 2 à 4, **caractérisé en ce que** la largeur (18) des éléments en coin (11, 12) est constante le long de leur axe longitudinal commun (14) et correspond à une longueur d'ouverture (16) des ouvertures (4, 5, 6, 7).

7. Dispositif (1) selon l'une quelconque des revendications 1 à 6, **caractérisé en ce que** le premier composant (2) et l'élément de liaison (10) sont fabriqués en acier, dans lequel le deuxième composant (3) est fabriqué en aluminium.
